# EUROPEAN PATENT APPLICATION

(11) **EP 2 259 222 A2**
(43) Date of publication of application: **08.12.2010**
(21) Application number: 10164595.0
(22) Date of filing: 01.06.2010
(51) Int. Cl.: G06T 11/40, G06T 15/40

(54) **Polygon processing unit, a program and an information recording medium**

(30) Priority: 05.06.2009 JP 2009136472
(71) Applicant: Kabushiki Kaisha Square Enix (also trading as Square Enix Co., Ltd.), Tokyo 151-8544 (JP)
(72) Inventor: Masuda, Akiyoshi, Tokyo 151-8544 (JP); Nishizawa, Ryota, Tokyo 151-8544 (JP)
(74) Representative: Pitchford, James Edward

(57) **Abstract**

It is an object of the present invention to provide a polygon processing apparatus that deletes information on a polygon which is not used in drawing, without changing the shape of a necessary polygon.
The present invention generates a plurality of scanning lines from polygons and determines whether or not all the scanning lines are shielded by another polygon. Then, the polygon whose all the scanning lines are shielded are assumed to be a polygon which is surrounded by another polygon and is not to be drawn, and drawing processing is not executed for the polygon. The present invention is based on a knowledge that those polygons which are not used in drawing can be excluded from those to be drawn with simple processing, without changing the shape of a necessary polygon.

## Description

### Cross Reference to Related Applications

This present application claims the benefit of Japan Patent Application No. 2009-136472, filed on June 5, 2009, which is incorporated herein by reference in its entirety.

### Technical Field

The present invention relates to a polygon processing apparatus for 3D computer graphics. More specifically, the present invention relates to a polygon processing apparatus that allows the reduction of the number of polygons without degrading the quality of external appearance, a program and an information storing medium.

### Background Art

In 3D computer graphics (3DCG), hidden surface removal processing is known as a method for drawing a 3D object in real time. The hidden surface removal processing is a method to remove the surfaces, which cannot be seen, hidden behind the other object or objects. A typical hidden surface removal processing is Z-buffer algorithm. The Z-buffer algorithm reads out z-values for each pixel on the screen from a z-buffer of each pixel. Then, the Z-buffer algorithm cancels the drawing processing in case the pixel to be processed next is located behind the z-value. The Z-buffer algorithm can thus complete the hidden surface removal processing. On the other hand, the Z-buffer algorithm has a problem of high processing cost because it reads out z-values per pixel from a z-buffer.

Early Z-culling algorithm is known as a method to exclude an unnecessary polygon from those to be processed prior to executing drawing processing per pixel. The early Z-culling algorithm is effective for real-time image processing because it does not involve the comparison of z-values per pixel. However, the early Z-culling algorithm is also high in processing cost because it ultimately refers to a z-buffer.

Specifically, in case of film making using 3DCG, each object includes a number of polygons. The use of such 3DCG in games increases the polygon processing cost, resulting in difficulty with real-time drawing. Therefore, it is preferable to perform the processing of reducing the number of polygons.

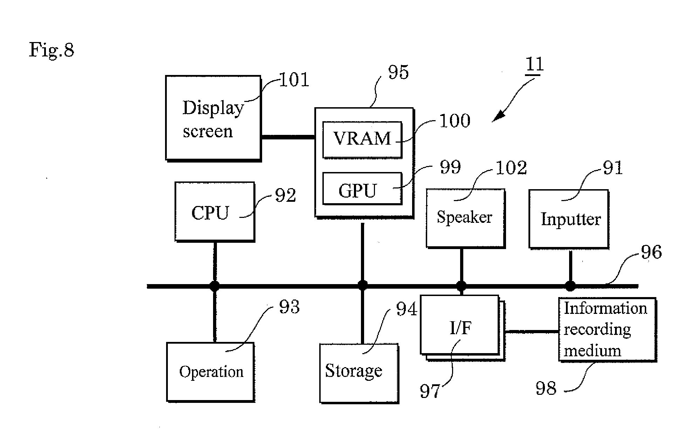

Japanese Laid-Open Patent Application No. 2000-57368 discloses a polygon processing method to reduce the number of polygons. A polygon generally consists of a plane comprising a plurality of vertices. The method disclosed in the publication is to allow vertices of a polygon conform to grid points and thereby delete adjacent minute polygons (Fig. 8). In order to achieve real-time 3DCG computer graphics, it is preferable to reduce the amount of processing for drawing. Therefore, the processing of reducing the number of polygons contributes to real-time computer graphic display.

Furthermore, occlusion culling algorithm is disclosed in U.S. Patent No. 5751291 as a method for processing 3DCG in real time. According to the method, a certain object is covered with a basic graphic. Then, it is determined whether the basic graphic covering the certain object is occluded by another basic graphic. According to the method, the object covered by the basic graphic occluded by another basic graphic is excluded from those to be drawn. The occlusion culling algorithm can thus reduce the number of objects to be drawn, resulting in the reduction of image processing cost.

### Patent Documents

Patent Document 1: Japanese Laid-Open Patent Application No. 2000-57368
Patent Document 2: U.S. Patent No. 5751291

### Disclosure of the Invention

### Problems to be Solved by the Invention

According to the method disclosed in Japanese Laid-Open Patent Application No. 2000-57368, the shape of a polygon is changed when its vertices are allowed to conform to grid points. The method also involves complex vertex processing when the vertices are allowed to conform to grid points.

Furthermore, the occlusion culling algorithm is a method for detecting an object which is not drawn. That is, it is not a method for finding out a polygon which is not drawn. Furthermore, the method is not suitable for precise computer graphics drawing because it approximates an object by a basic graphic prior to processing.

Therefore, it is an object of the present invention to provide a polygon processing apparatus that deletes information on a polygon which is not used in drawing, without changing the shape of a necessary polygon (primitive).
It is another object of the present invention to provide a polygon processing apparatus that deletes information on a polygon which is not used in drawing with relatively simple processing.
It is still another object of the present invention to provide a program that mounts the above polygon processing apparatus on a computer and an information storing medium recorded with such a program.

### Means for Solving Problems

The present invention generates a plurality of scanning lines from polygons and determines whether or not all the scanning lines are shielded by another polygon. If all the scanning lines from the polygon are shielded, the polygon is assumed to be surrounded by another polygon and not drawn polygon, and the apparatus does not execute a drawing processing for the polygon. The present invention is based on a knowledge that, by executing the above processing, the polygon which is not used in drawing can be excluded from those to be drawn with relatively simple processing, without changing the shape of a necessary polygon.

The first aspect of the present invention relates to a polygon processing apparatus for 3D computer graphics. The polygon processing apparatus comprises a polygon information storing device, a scanning line generator, a shielding judgment device and a drawing processor. The polygon information storing device stores information on polygons. The scanning line generator generates a plurality of scanning lines from polygons stored on the polygon information storing device in a plurality of directions. The shielding judgment device determines whether or not the scanning lines are shielded by another polygon. The drawing processor controls not to execute a predefined drawing processing on polygons in case the shielding judgment device determines that all the scanning lines generated from the certain polygon are shielded by another polygon.

A preferred embodiment of the polygon processing apparatus according to the first aspect of the present invention is such that the scanning line generator comprises a device that generates a plurality of scanning lines from a random position within a polygon in random directions.

A preferred embodiment of the polygon processing apparatus according to the first aspect of the present invention further comprises a polygon transparency determination device. The polygon transparency determination device is a device that determines whether or not the polygon with which scanning lines intersect is transparent or translucent. And, the shielding determination device determines that the scanning lines are not shielded by the polygon in case the polygon with which the scanning lines intersect is transparent or translucent. This embodiment of the polygon processing apparatus can be combined with any of the above-mentioned embodiments.

In this way, drawing processing can be executed because, even in case a transparent or translucent polygon intersects with scanning lines, the scanning lines are not shielded.

The second aspect of the present invention relates to a 3D computer graphics program. The program is such that it allows a computer to execute the steps of: generating a plurality of scanning lines from polygons in a plurality of directions; determining whether or not the scanning lines are shielded by another polygon; and controlling not to execute predefined drawing processing for a polygon in case all the scanning lines generated from the polygon are determined to be shielded by another polygon. In other words, the program can be one which can allow a computer to operate as the polygon processing apparatus according to the first aspect as described above.

A preferred embodiment of the second aspect of the present invention relates to a program that further allows a computer to execute a step of determining whether or not a polygon with which scanning lines intersect is transparent or translucent. And the computer determines that the scanning lines are not shielded by the polygon in case the polygon with which the scanning lines intersect is transparent or translucent.

The third aspect of the present invention relates to a computer-readable information storing medium that records the above program.

### Effect of the Invention

The present invention generates a plurality of scanning lines from polygons, and determines whether or not all the scanning lines are shielded by another polygon. The polygon processing apparatus of the present invention can thereby delete information on a polygon which is not used in drawing with relatively simple processing, without changing the shape of a necessary polygon. Furthermore, the present invention can provide a program that implements the above polygon processing apparatus on a computer, or an information storing medium that stores the program.

### Brief Description of the Drawings

Fig. 1 is a block diagram of a polygon processing apparatus which is one of the embodiments of the present invention.
Fig. 2 is a diagram for illustrating an example how scanning lines in polygons are generated randomly.
Fig. 3 shows grid points on polygons.
Fig. 4 is a diagram for illustrating an example how scanning lines in polygons are generated in accordance with a certain rule.
Fig. 5 is a conceptual diagram showing how scanning lines are shielded.
Fig. 6 is a conceptual diagram showing how at least one scanning line is not shielded.
Fig. 7 is a conceptual diagram showing how polygons with which scanning lines intersect are transparent or translucent.
Fig. 8 is a block diagram of a polygon processing apparatus according to a certain embodiment of the present invention.
Fig. 9 is a flow chart for illustrating the basic steps of the computer graphics drawing method of the present invention.
Fig. 10 is a flow chart for illustrating the computer graphics drawing method of the present invention.
Fig. 11 is a block diagram exemplifying the entire configuration of a video production system.
Fig. 12 is a flow chart exemplifying the operating procedure of a video production system.

### Best Mode for Carrying Out the Invention

Hereinafter, embodiments for carrying out the present invention will be described. It should be noted that the present invention is not limited to the embodiments as described below. The present invention includes those scopes which may be modified appropriately within the scope obvious to those skilled in the art.

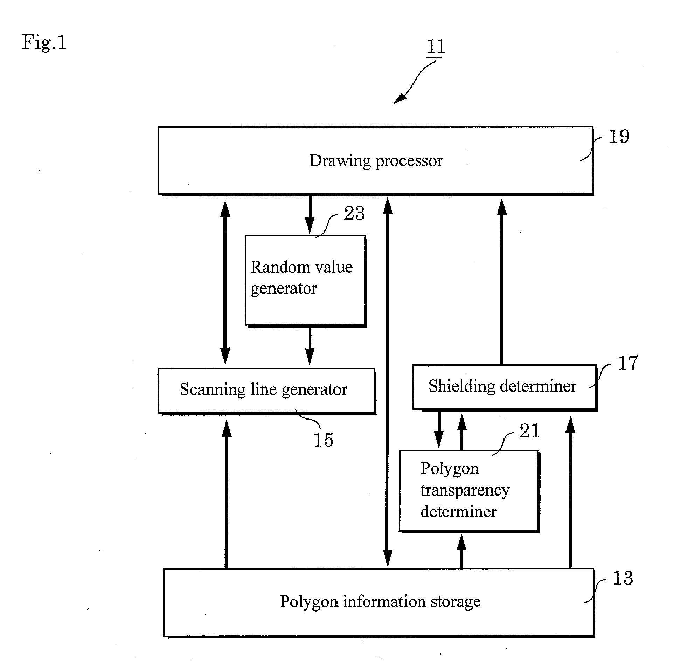

Fig. 1 is a block diagram of a polygon processing apparatus which is one the embodiments of the present invention. As shown in Fig. 1, the polygon processing apparatus 11 comprises polygon information storage 13, a scanning line generator 15, shielding determiner 17, a drawing processor 19, a polygon transparency determiner 21 and a random value generator 23. The polygon processing apparatus 11 is used to execute 3D computer graphics drawing processing. The polygon processing apparatus 11 is mounted, for example, on game equipment, a personal computer, a navigator, or a handheld communication terminal. Each of equipments may be implemented by hardware. Alternatively, each of equipments may be implemented by both hardware and software.

The polygon information storage 13 stores information on a polygon. The term "polygon" is used herein to mean each plane (primitive) when a certain object is expressed by a plurality of planes. An example of shapes of a polygon is a triangle. Examples of information on a polygon include coordinates of vertices which constitute polygons, color information at each vertex, transparency information at each vertex, reflectivity information at each vertex, information on the texture of a polygon, and various information used for image processing.

The scanning line generator 15 generates a plurality of scanning lines from polygons in a plurality of directions. The scanning line generator 15 reads out the vertex coordinates of polygons from the polygon information storage 13. Then, the scanning line generator 15 calculates the coordinate values on the polygon using the read out vertex coordinates. The scanning line generator 15 generates scanning lines from the calculated point on the polygon. As will hereinafter be described, the scanning lines are used in executing shielding determination processing. It is preferable to predefine the number of scanning lines generated from one polygon. In other words, in order to carry out more precise drawing processing, the number of scanning lines generated from one polygon may be increased. An example of the number of scanning lines is between 3 and 10². An example of the number of scanning lines in case of more precise drawing processing is between 10 and 10².

In case scanning lines are generated completely at random, the scanning lines may be deflected in a certain direction. This may prevent appropriate image processing. Therefore, the polygon processing apparatus 11 of the present invention preferably processes so that it may include, in the plurality of scanning lines, scanning lines in the normal direction of a polygon or scanning lines in the opposite direction from the normal direction. In such case, the polygon processing apparatus 11 generates, for example, a plurality of scanning lines in the normal direction and in a random direction. Also, the polygon processing apparatus 11 of the present invention preferably processes so that it may include, in the plurality of scanning lines, scanning lines in the z-direction of a polygon. Furthermore, the polygon processing apparatus 11 of the present invention preferably processes so that it may include, in the plurality of scanning lines, scanning lines in the user's viewpoint direction.

The plurality of scanning lines may be generated from a certain one point within a polygon. Alternatively, the plurality of scanning lines may be generated from predefined point(s) within a polygon. Examples of the predefined point(s) include a vertex or vertices and a midpoint of two vertices. Furthermore, the plurality of scanning lines may be generated from random point(s) within a polygon.

The shielding determiner 17 determines whether or not scanning lines are shielded by another polygon. In other words, the shielding determiner 17 determines whether or not scanning lines intersect with another polygon in case the another polygon is not transparent.

The shielding determiner 17 reads out the coordinate vertices of a polygon stored on the polygon information storage 13. Then, the shielding determiner 17 determines whether or not scanning lines intersect with another polygon using the read out coordinate vertices of the polygon.

The drawing processor 19 controls not to execute predefined drawing processing for polygons in case the shielding determiner 17 determines that all the scanning lines generated from polygons are shielded by another polygon. This excludes the certain polygon from those to be drawn. Examples of predefined drawing processing include texture readout processing and sweeping processing. An example of the sweeping processing may include color sweeping processing for gradually changing the color shades among each vertex.

The drawing processor 19 receives information that all the scanning lines are shielded by another polygon from the shielding determiner 17. The drawing processor 19 then determines that the polygon from which the scanning lines are generated is the polygon which is not necessary to be displayed. In such case, the drawing processor 19 does not read out information on the polygon from the polygon information storage 13 in executing drawing processing. On the other hand, in case the drawing processor 19 receives information that all the scanning lines are not shielded by another polygon from the shielding determiner 17, it reads out the polygon information and executes normal image processing.

The polygon transparency determiner 21 determines whether or not the polygon with which scanning lines intersect is transparent or translucent. The shielding determiner 17 may determine that the scanning lines are not shielded by another polygon in case the polygon with which the scanning lines intersect is transparent or translucent.

Next, preferred embodiments of the polygon processing apparatus 11 of the present invention will be described. In case the shielding determiner 17 determines that a certain scanning line intersects with another polygon, the shielding determiner 17 transmits the polygon information to the polygon transparency determiner 21. Then, the polygon transparency determiner 21 reads out information on the transparency of the vertices which constitute the polygon from the polygon information storage 13. And the polygon transparency determiner 21 determines whether or not the polygon is transparent or translucent. In case the polygon is transparent or the transparency of the polygon is above a predefined transparency, the polygon transparency determiner 21 determines that the polygon is transparent or translucent. The polygon transparency determiner 21 transmits the determination result to the shielding determiner 17. And the shielding determiner 17 determines that the scanning line is not shielded in case the polygon with which the scanning line intersects is transparent or translucent.

As the polygon processing apparatus 11 of the present invention adopts the above configuration, it can appropriately identify whether or not polygons is not necessary to be drawn.

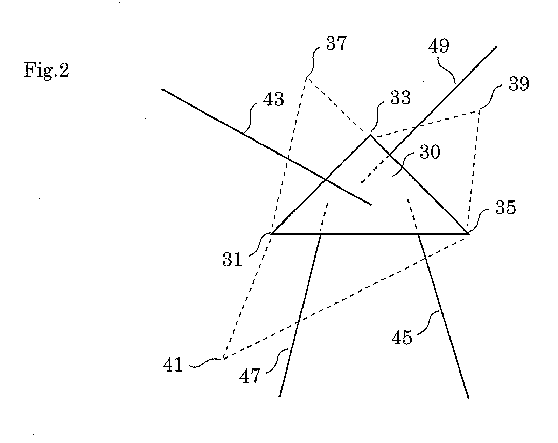

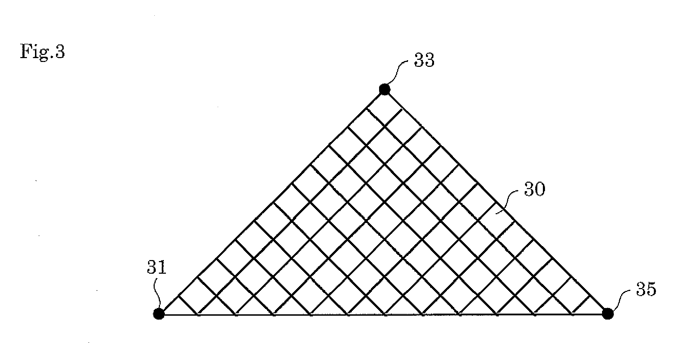

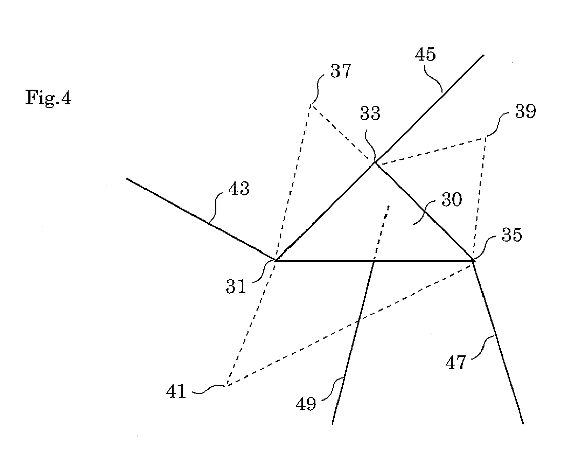

Next, an operating example of the above polygon processing apparatus 11 will be described with reference to the accompanying figures. Fig. 2 is a diagram for illustrating an example how scanning lines in polygons are generated randomly. Fig. 3 shows grid points on polygons. Fig. 4 is a diagram for illustrating an example how scanning lines in polygons are generated in accordance with a certain rule. In Fig. 2, numerals 37, 39 and 41 are vertices of the polygons adjacent to the first polygon 30.

The scanning line generator 15 reads out coordinates of vertices 31, 33 and 35 of polygons 30 from the polygon information storage 13. The coordinate of the vertex 31 is described as V(X₃₁, Y₃₁, Z₃₁), for example. The scanning line generator 15 can identify the position of the first polygon 30 from these vertex coordinates. An example of how to generate scanning lines will hereinafter be described. The first thing to identify the spatial position of the first polygon 30 is to first calculate the coordinates of points on the sides of a triangle. For example, the points on the sides 31 and 33 can be calculated using V(X₃₁, Y₃₁, Z₃₁) and V(X₃₃, Y₃₃, Z₃₃) by sweeping between these values. Then, the coordinates within the triangular plane can be calculated by sweeping between two points on the adjacent sides. The coordinates of each point on the polygon can thus be calculated.

An example of how to locate the directions in case scanning lines are generated in random directions as shown in Fig. 2 will be described. The travelling direction of a straight line within 3D space can be expressed, for example, with an angle θ between the x-axis within the XY plane and the projection of the straight line toward the XY plane and an angle ϕ between the straight line and the projection of the straight line toward the XY plane. In the example as shown in Fig. 1, when generating a certain scanning line, the scanning line generator 15 receives random values from the random number generator 23. In order to obtain θ, the scanning line generator 15 allows the random number generator 23 to randomly generate any number between 1 and 360. Similarly, in order to obtain ϕ, the scanning line generator 15 allows the random number generator 23 to randomly generate any number between 1 and 360. The operation is repeated as many times as the number of scanning lines. This way, the directions of the plurality of scanning lines can be obtained.

Next, in case scanning lines are generated from random positions on a polygon, the positions from which the scanning lines are generated may be obtained as described below, for example. First, a polygon is divided into the form of a mesh. Fig. 3 shows grid points on polygons. In case one side on a polygon is divided into d parts, for example, the number of grid points on the polygon is (d²+3d+2)/2. Among three vertices which constitute the polygon, the one with the smallest x-coordinate is set as the first vertex 31, and the one with the next smallest x-coordinate is set as the second vertex 33. As for two vertices having the same x-coordinate, the one with the smaller y-coordinate may be set as the forward vertex. And, the first vertex 31 is set as a grid point identified by number 1, and each following grid point is assigned numbers up to (d²+3d+2)/2. For example, the second vertex 33 is number (d²+1d+2)/2, and the third vertex 35 is number (d²+3d+2)/2.

The scanning line generator 15 allows the random number generator 23 to randomly generate any number between 1 and (d²+3d+2)/2 in order to determine the grid point from which scanning lines are to be generated. Then, the scanning line generator 15 receives the number the random number generator 23 generates. The scanning line generator 15 sets the grid point identified by the received number as the grid point from which scanning lines are to be generated. In this way, scanning lines can be generated from random positions on a polygon.

In order to generate a first scanning line 43, the following processing may be executed. The scanning line generator 15 receives information on the polygon division number d from the polygon information storage 13. Then, the scanning line generator 15 requests the random number generator 23 to randomly generate any number up to (d²+3d+2)/2. And the scanning ling generator 15, using the obtained number as an address, calculates the point from which the first scanning line 43 is generated. Next, the scanning line generator 15 requests the random number generator 23 to randomly generate two numbers between 1 and 360. The scanning line generator 15 sets the obtained two numbers as θ and ϕ, respectively, and determines the direction of the first scanning line 43. In this way, the scanning line generator 15 can obtain the first scanning line 43. The scanning line generator 15 can obtain the second scanning line 56, the third scanning line 47, and the forth scanning line 49 in the same way that it obtains the first scanning line 43. The scanning line generator 15 can generate the subsequent scanning lines in the same way.

Scanning lines may be generated only from the first vertex 31, for example. In this case, the necessary scanning lines can be obtained by obtaining θ and ϕ on a predefined number (n) of scanning lines. Alternatively, as shown in Fig. 4, scanning lines may be generated from the first vertex 31, the second vertex 33, and the third vertex 35. In this case, the positions of the scanning lines generated from the points other than these vertices may be obtained. Alternatively, the direction of the first scanning line 43 may be the normal direction of the polygon 30. In this case, the directions of the scanning lines subsequent to the second scanning line 45 may be a predefined direction or may be a random direction.

Next, an operating example where the shielding determiner 17 determines whether or not scanning lines are shielded by another polygon will be described. In case the first scanning line 43 is shielded by another polygon, for example, the shielding determiner 17 determines whether or not the second scanning line 45 is shielded by the another polygon. The shielding determiner 17 executes the same processing for the scanning lines subsequent to the second scanning line 45. On the other hand, in case the shielding determiner 17 determines that the first scanning line is not shielded by another polygon, it does not execute the processing for the second scanning line 45. In this case, the shielding determiner 17 determines that the scanning lines are not shielded by the another polygon.

Whether the first scanning line 43 intersects with the polygon 59 on the second object 51 may be determined as described below, for example. The shielding determiner 17 reads out the coordinate V(X₅₃, Y₅₃, Z₅₃) of the first vertex 53, the coordinate V(X₅₅, Y₅₅, Z₅₅) of the second vertex 55, and the coordinate V(X₅₇, Y₅₇, Z₅₇) of the third vertex 57 on the polygon 59, from the polygon information storage 13. The shielding determiner 17 calculates the x-coordinate value at Z₅₃ of the first scanning line 43. In case the calculated x-coordinate value is smaller than X₅₃ or larger than X₅₇, the shielding determiner 17 determines that the first scanning line 43 does not intersect with the polygon 59. In case the calculated x-coordinate value is larger than X₅₃ and smaller than X₅₇, the shielding determiner 17 calculates the maximum value (Yₘₐₓ) and the minimum value (Yₘᵢₙ) from Y₅₃ and Y₅₇. The shielding determiner 17 calculates the y-coordinate value at Z₅₃ of the first scanning line 43. In case the calculated y-coordinate value is smaller than Yₘᵢₙ or larger than Yₘₐₓ, the shielding determiner 17 determines that the first scanning line 43 does not intersect with the polygon 59. The use of this kind of approximation method in determining the intersection between scanning lines and polygons can substantially reduce the amount of information processing. The above determination method may be a primary screening method. Then, in case the first scanning line 43 is determined to intersect with the polygon 59 by the above method, it may be determined whether the first scanning line 43 further intersects with the polygon 59.

In case the shielding determiner 17 determines that the first scanning line 43 does not intersect with the polygon 59, the shielding determiner 17 determines whether or not the next polygon intersects with the scanning line 43. The shielding determiner 17 repeats the operation.

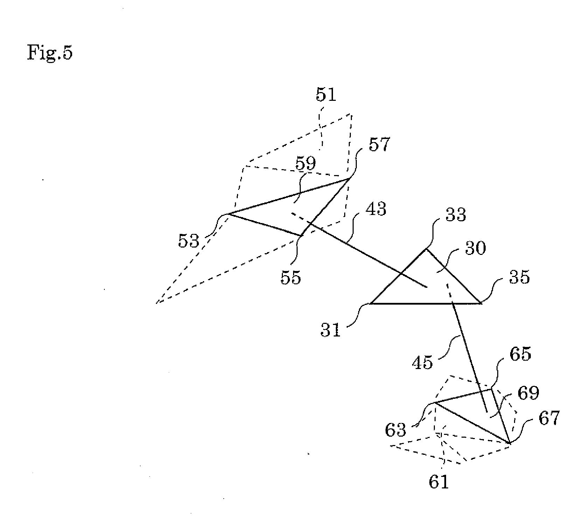

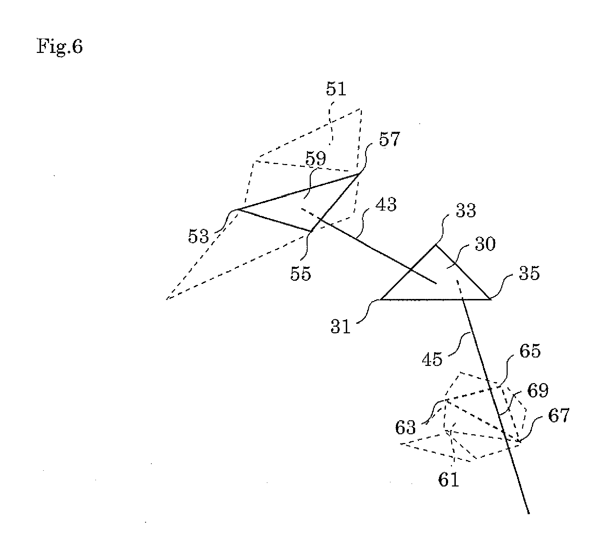

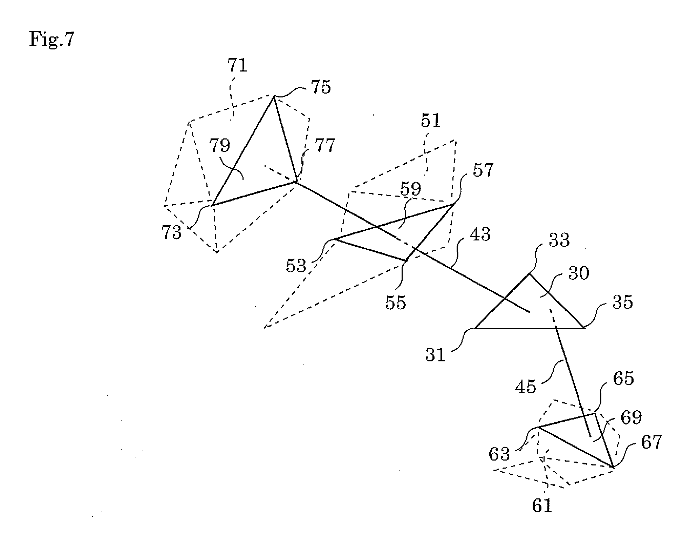

In case the shielding determiner 17 determines that the first scanning line 43 is shielded by a polygon, the shielding determiner 17 determines whether or not the second scanning line 45 is shielded by a polygon. Fig. 5 is a conceptual diagram showing how scanning lines are shielded. Fig. 6 is a conceptual diagram showing how at least one scanning line is not shielded. Fig. 7 is a conceptual diagram showing how the polygon with which the scanning line intersects is transparent or translucent. In case of Fig. 5, the first scanning line 43 is shielded by the second polygon 59. Also, the second scanning line 45 is shielded by the third polygon 69 (defined by the vertices 63, 65 and 67) at the second object 61. In this way, it may be sequentially determined whether each of all the scanning line contacts with polygons.

In case the shielding determiner 17 determines that all the scanning lines for polygons are shielded by another polygon, the polygon is one is not necessary to be drawn. In this case, the shielding determiner 17 transmits the drawing-unnecessary information (information on the determination that all the scanning lines for polygons are shielded by another polygon) to the drawing processor 19.

The drawing processor 19 is equipment that executes drawing processing on 3D computer graphics. In case the drawing processor 19 receives the drawing-unnecessary information from the shielding determiner 17, it controls not to execute predefined drawing processing for polygons. For example, the drawing processor 19 does not execute rendering processing for the certain polygon but executes drawing processing for another polygon.

On the other hand, in the example as shown in Fig. 6, the second scanning line 45 is not shielded by any polygon. Namely, compared to the example of Fig. 5, the third polygon 65 does not exist which shields the second scanning line 45. In this case, polygons 30 is the polygon which may be drawn. In this case, it is not necessary to determine whether or not each of the scanning lines subsequent to the third scanning line 47 is shielded by another polygon. For that reason, the shielding determiner 17 no longer determines whether or not scanning lines are shielded by polygons.

A preferred embodiment of the polygon processing apparatus 11 is such that it enables computer graphics taking into account transparent or translucent polygons. The operating example of this embodiment will be described with reference to Fig. 7. In case the shielding determiner 17 determines that a certain scanning line 43 intersects with polygons 59, the shielding determiner 17 transmits information on the polygon 59 to the polygon transparency determiner 21. Then, the polygon transparency determiner 21 reads out information on the transparency at the vertices 53, 55 and 57 which constitute the polygon 59, from the polygon information storage 13. Then, the polygon transparency determiner 21 determines whether or not the polygon is transparent or translucent. In case the transparency at all of the vertices 53, 55 and 57 is 100%, the polygon transparency determiner 21 determines that the polygon 59 is transparent. In case the transparency of the polygon is above the predefined transparency, the polygon transparency determiner 21 determines that the polygon is translucent. The "predefined transparency" when the polygon transparency determiner 21 determines that polygons is translucent may be stored in the polygon information storage 13. It should be noted that the predefined transparency may be changeable accordingly. The polygon transparency determiner 21 reads out the predefined transparency stored in the polygon information storage 13 when it determines whether or not polygons is translucent. Then, the polygon transparency determiner 21 compares the transparency at the intersection between a certain scanning line and polygons with the read out predefined transparency. The transparency at the intersection with the polygon can be obtained by sweeping the transparency at the vertices 53, 55 and 57. The transparency at the intersection may be obtained as the arithmetic mean of the transparency at the vertices 53, 55 and 57. In this case, the polygon transparency determiner 21 reads out the transparency at the vertices 53, 55 and 47 from the polygon information storage 13, and carries out the operation of summing the read out values and dividing the sum by 3. In this way, the polygon transparency determiner 21 determines whether or not the polygon is translucent. The polygon transparency determiner 21 transmits the judgment result to the shielding determiner 17. Then, in case the polygon with which a certain scanning line intersects is transparent or translucent, the shielding determiner 17 determines that the scanning line is not shielded.

For example, in case the polygon 59 which a certain scanning line 43 first contacts is transparent or translucent, the shielding determiner 17 determines whether the scanning line 43 will further be shielded by another polygon. Then, in case the scanning line 43 contacts the next object 71, the shielding determiner 17 determines whether the forth polygon 79 identified by the vertices 73, 75 and 77 is transparent or translucent. In case the forth polygon 79 is neither transparent nor translucent, the first scanning line is shielded. Thus, the polygon processing apparatus 11 cancels the processing on the first scanning line, and starts the operation on whether or not the second scanning line will be shielded by another polygon.

Fig. 8 is a block diagram of a polygon processing apparatus according to a certain embodiment of the present invention. The polygon processing apparatus 11 comprises an inputter 91, a CPU 92, an arithmetic operator 93, a storage 94, and an image processing block 95. Each of the components is connected together via a bus 96 for transmission and reception of information. Also, the polygon processing apparatus 11 is connected to an interface (I/F) 97 via the bus 96. Thus, the polygon processing apparatus 11 can be connected via the I/F 97 with the information storing medium 98 storing a program, for example. The program allows a computer or an image processor to function as a predefined device. The program also allows a computer or an image processor to execute predefined steps. A memory connected via the I/F 97 may function as all or part of the storage 94.

The image processing block 95 comprises a graphics processing unit (GPU) 99 and a video RAM (VRAM) 100. And the GPU 99 and the VRAM 100 are connected together for transmission and reception of information. In the figure, numeral 101 indicates a display screen (monitor) and numeral 102 indicates a speaker.

In this embodiment, the workspace of the CPU 92, the arithmetic operator 93 and the storage 94, and the game program stored in the information storing medium 98 function as the scanning line generator 15, the shielding determiner 17, the drawing processor 19, the polygon transparency determiner 21, and the random value generator 23. And the storage area of the storage 95 and the information storing medium 98 functions as the polygon information storage 13 and a work area. When operating information is input from the inputter 91, the operating information is transmitted to the CPU 92 via the bus 96. Then, the CPU 92 reads out the program stored in the information storing medium 98 and executes predefined processing. The CPU 92 reads out various information stored in the storage 94 or the information storing medium 98 in accordance with the program, and executes the predefined arithmetic operation at the arithmetic operator 93. The CPU 92 stores the operation result in the storage 94 appropriately, and uses the operation result to output appropriate information from the monitor 101 or the speaker 102.

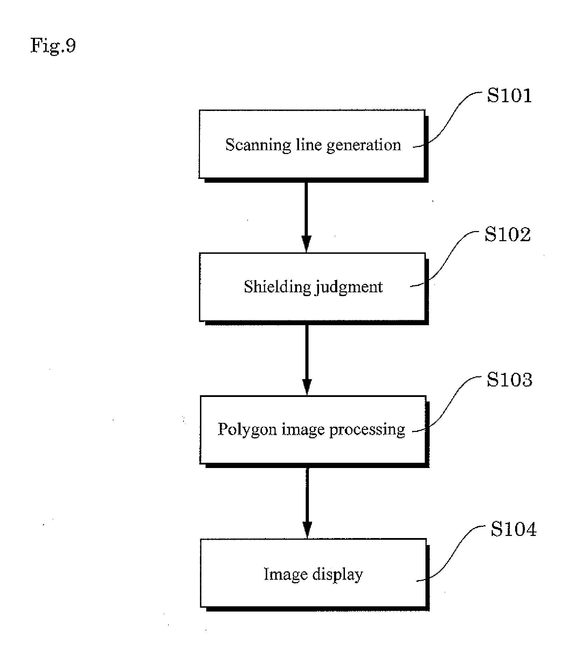

Next, a basic operating example of the polygon processing apparatus 11 will be described. Fig. 9 is a flow chart for illustrating the basic steps of the computer graphics drawing method of the present invention. In the figure, the code S refers to a step. As shown in Fig. 9, the 3DCG drawing method of the present invention comprises a scanning line generating step (Step 101), a shielding determination step (Step 102),a polygon drawing processing step (Step 103), and an image displaying step (Step 104). Namely, in the example as shown in Fig. 8, the program stored in the information storing medium 98 allows a computer to execute each of the above steps.

The scanning line generating step (Step 101) is a step that generates a plurality of scanning lines from polygons in a plurality of directions. The shielding determination step (Step 102) is a step for determining whether or not a scanning line is shielded by another polygon. The polygon drawing processing step (Step 103) is a step for controlling not to execute predefined drawing processing for polygons in case all the scanning lines generated from polygons are shielded by another polygon. The image display step (Step 104) is a step for obtaining image data to be displayed on the monitor 101 based on the drawing processing at the polygon drawing processing step (Step 103) and for displaying the image on the monitor 101.

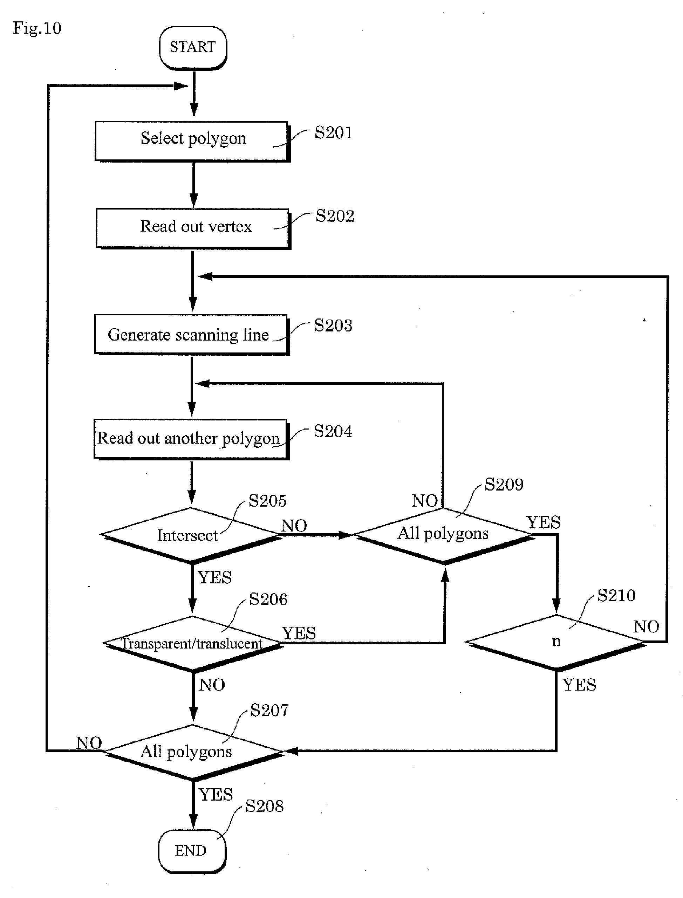

Hereinafter, operating examples of at each step will be described in detail with use of Fig. 10. Fig. 10 is a flow chart for illustrating the computer graphics drawing method of the present invention. The polygon processing apparatus 11 selects polygons 30 out of the polygons to be drawn (step 201). The order of reading out the certain polygon 30 out of a plurality of polygons is arbitrary. For example, the storage 94 may assign each polygon with orders when the polygons are generated and store them. And the CPU 92 reads out each polygon in accordance with the assigned orders.

The polygon processing apparatus 11 reads out the coordinates of the vertices of the polygon 30 selected at step 201 (step 202). The CPU 92 reads out the coordinates of the vertices 31, 33 and 35 of the certain polygon from the storage 94. The CPU 92 uses the read out information to instruct the arithmetic operator 93 to obtain the vertices within the triangular plane. In this way, the polygon processing apparatus 11 can obtain the coordinates of each point on the polygon.

Next, the polygon processing apparatus 11 generates scanning lines from the certain polygon 30 (step 203). The CPU 92 obtains the position on the polygon from which the first scanning line is generated. The CPU 92 instructs the arithmetic operator 93 to divide the polygon as shown in Fig. 3 with use of the coordinates of the vertices 31, 33 and 35 of the polygon and to obtain a plurality of grid points. The arithmetic operator 93 reads out information on the division number d from the storage 94, and uses the coordinates of the vertices 31, 33 and 35 of the polygon to execute the arithmetic operation of obtaining the plurality of grid points.

Next, the CPU 92 instructs the arithmetic operator 93 to randomly generate any number up to (d²+3d+2)/2. And the CPU 92 temporarily stores the received random number in the storage 94. The random number is the number that specifies the address where the scanning line has been generated.

Next, the polygon processing apparatus 11 executes the operation of obtaining the directions of the scanning line. The CPU 92 instructs the arithmetic operator 93 to randomly generate two numbers between 1 and 360. The CPU 92 stores the obtained two numbers in the storage 94. The polygon processing apparatus 11 uses the two numbers as θ and ϕ defining the direction of the scanning line. The CPU 92 instructs the arithmetic operator 93 to set a random number up to (d²+3d+2)/2 as the generation position of a scanning line and to use random two numbers between 1 and 360 to generate the scanning line. In this way, the polygon processing apparatus 11 can generate scanning lines from polygons.

Next, the polygon processing apparatus 11 reads out information on another polygon (Step 204). For example, the CPU 92 reads out the coordinates of the first vertex 53, the coordinates of the second vertex 55, and the coordinates of the third vertex 57 of another polygon 59.

The polygon processing apparatus 11 determines whether or not the first scanning line 43 intersects with the another polygon 59 (step 205). The CPU 92 instructs the arithmetic operator 93 to use the coordinates of the read out three vertices 53, 55 and 57 to determine whether or not the polygon 59 intersects with the first scanning line 43. Then, the CPU 92 receives the operation result from the arithmetic operator 93. In case a certain scanning line does not intersect with any polygon, the polygon from which the scanning line is generated is the polygon to be drawn. The CPU 92 stores, in the storage 94, information that whether the first scanning line 43 intersects with the another polygon 59 was determined.

The polygon processing apparatus 11 determines whether or not the polygon which intersects with a scanning line is transparent or translucent. In case the CPU 92 determines that the first scanning line 43 intersects with another polygon 59, the CPU 92 instructs the arithmetic operator 93 to determine whether or not the polygon 59 is transparent or translucent. In case there are no transparent or translucent objects to be drawn, the polygon processing apparatus 11 may execute the drawing processing without executing the subject step.

The CPU 92 reads out information on the transparency at the vertices 53, 55 and 57 which constitute the polygon 59 from the storage 94. Then, the CPU 92 instructs the arithmetic operator 93 to determine whether or not the polygon is transparent or translucent. In case the transparency at all the vertices 53, 55 and 57 is 100%, the arithmetic operator 93 determines that the polygon 59 is transparent. The arithmetic operator 93 reads out the predefined transparency (threshold) stored in the storage 94 in determining whether or not the polygon 59 is translucent. Then, the arithmetic operator 93 compares the transparency at the intersection between the scanning line 43 and the polygon 59 with the read out predefined transparency. This way, the arithmetic operator 93 determines whether or not the polygon 59 is translucent. Then, the CPU 92 receives the operation result from the arithmetic operator 93. In case the polygon with which a scanning line intersects is neither transparent nor translucent, the polygon 30 from which the scanning line is generated may be a polygon not to be drawn.

The polygon processing apparatus 11 determines whether or not whether or not the generated scanning lines are shielded by other polygons has been determined for all the polygons (Step 207). More specifically, the CPU 92 stores the numbers of the polygons which have completed steps 201 through step 206 in the storage 94. Then, the CPU 92 allows the arithmetic operator 93 to determine whether, using the numbers of the processed polygons stored in the storage 94, whether or not drawing is necessary has been determined for all the polygons. Then, the CPU 92 receives the operation result from the arithmetic operator 93.

In case the polygon processing apparatus 11 determines that whether or not scanning lines are shielded has been determined for all the polygons, it ends the polygon processing (step 208). The CPU 92 receives the operation result from the arithmetic operator 93, and, in case it determines that it has determined whether or not drawing is necessary for all the polygons, it ends the polygon processing. This decreases the number of polygons necessary for drawing processing. Therefore, the image display comprising the polygon processing apparatus 11 can display computer graphics faster and more appropriately.

In case the polygon processing apparatus 11 determines that the first scanning line 43 does not intersect with another polygon 59 at step 205, it goes on to Step 209. This step is the step where the polygon processing apparatus 11 determines whether or not whether or not a certain scanning line intersects with all the polygons has been determined (step 209). The CPU 92 reads out the intersection-determination information stored in the storage 94, and instructs the arithmetic operator 93 to determine whether or not whether or not a certain scanning line intersects with all the polygons has been determined. The CPU 92 receives the operation result from the arithmetic operator 93. In case the CPU 92 determines that whether or not a certain scanning line intersects with all the polygons has not been determined, the polygon processing apparatus 11 returns to step 204 and reads out a new polygon (step 204). Then, the polygon processing apparatus 11 determines whether or not a certain scanning line intersects with the newly read out polygon (step 205).

On the other hand, in case the CPU 92 determines that whether or not a certain scanning line intersects with all the polygons has been determined, the polygon processing apparatus 11 goes on to step 10. At this step, the polygon processing apparatus 11 determines whether or not each of all the scanning lines intersect with all the polygons has been determined (step 210). The CPU 92 reads out information on the scanning lines whether or not which intersect with polygons has been determined, and instructs the arithmetic operator 93 to determine whether or not each of all the scanning lines intersects with all the polygons has been determined. The CPU 92 receives the operation result from the arithmetic operator 93. In case the CPU 92 determines that whether or not each of all the scanning lines intersect with all the polygons has been determined, the polygon 30 from which a scanning line is generated is to be drawn. In this case, the CPU 92 processes the polygon 30 as the one to be drawn, and the polygon processing apparatus 11 goes on to step 207. On the other hand, in case the CPU 92 determines that whether or not each of all the scanning lines intersect with all the polygons has not been determined, the polygon processing apparatus 11 returns to step 203. Then, the polygon processing apparatus 11 generates a new scanning line (step 203), and determines whether or not the generated scanning line is shielded by another polygon (step 204 to step 206).

In case the generated scanning line is not shielded by another polygon for all the polygons at Step 207, the polygon processing apparatus 11 returns to step 201 and determines whether or not the next polygon is shielded by another polygon (step 201 through step 206).

By processing in this way, the polygon processing apparatus 11 of the present invention can reduce the number of polygons without degrading the quality of external appearance. Just as an example, there are kind of games where players can change the characters' costumes. In creating game images of such games, those polygons which are not necessary to be drawn change with the change of the characters' costumes. The use of the polygon processing apparatus 11 of the present invention makes it easier to identify the polygons which are hidden with the changed costumes. Therefore, the use of the polygon processing apparatus 11 of the present invention can reduce the load at runtime. Furthermore, in 3DCG realizing animation, the application of the polygon processing of the present invention to all the frames can reduce the amount of image processing without degrading the quality of external appearance in animation. Thus, the polygon processing apparatus 11 of the present invention is particularly effective for real-time 3DCG drawing.

### Embodiment 1

The present embodiment relates to the above polygon processing apparatus for a video production system which completes one video product by integrating a plurality of video configuration data.
Video games or animations by means of 3DCG (Computer Graphics) etc. are produced by a number of designer's teamwork in the processes such as character design, motion design, effect production, layout design, sound design, and scene editing. Production of video games or animations accompanies very large-scale works and thus makes it harder to identify the whole picture. As a result, problems often occur, such as work inefficiency and difficulty in balance adjustment between development works. In particular, production of video products has a unique problem of proceeding with individual works while checking what it will be at the end. Therefore, a new system which can solve such problems has been required.

The present embodiment provides a new system which enables more efficient development works in the large-scale development of a video product and which can easily adjust the balance between development works.

Namely, the video production system is a video production system which completes one video product by integrating a plurality of video configuration data, comprising: a plurality of individual editing tools that creates/edits the plurality of video configuration data; a server that obtains the plurality of created and/or edited video configuration data and integrating them to create one video datum; and a target display device that displays the video data obtained from the server on a predefined machine platform, the plurality of individual editing tools comprising a data transmission device that continuously operates on each individual editing tool, **characterized in that** the data transmission device transmits new video configuration data created and/or edited for the server every time the video configuration data is created and/or edited r, and the server continuously creates the latest video data every time it obtains the new video configuration data. And the polygon processing apparatus of the present invention functions as one of individual editing tools.

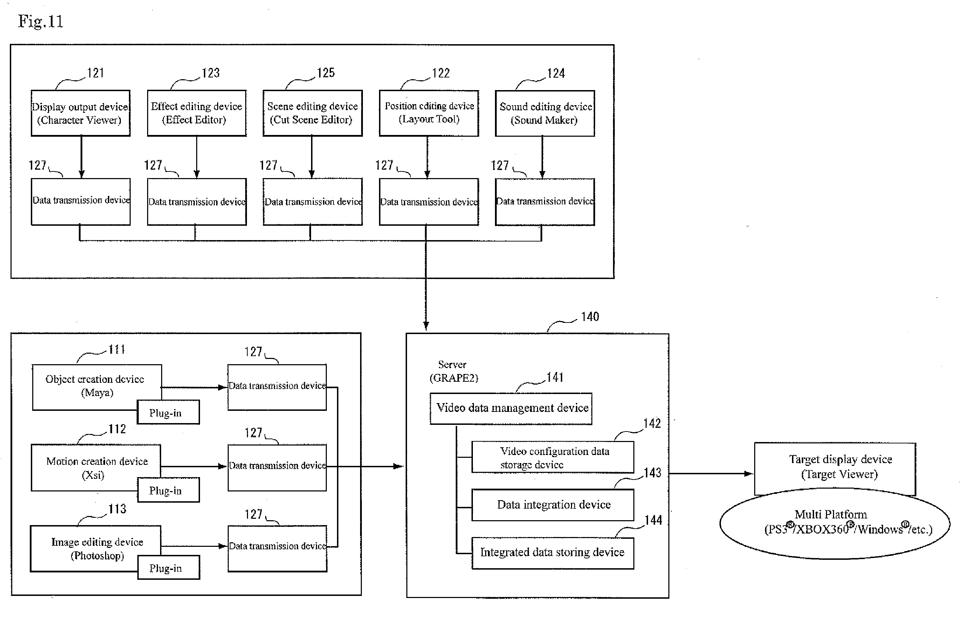

Fig. 11 is a block diagram exemplifying the entire configuration of a video production system according to the present embodiment. The video production system according to the present embodiment has a plurality of individual editing tools 122, 123, 124 and 125 that individually edit a plurality of video configuration data (e.g., model data, effect data, scene editing information, position editing information, and sound data) which are components of one video datum (e.g., animation). As examples of the individual editing tools, a position editing device 122 that defmes/edits the position of the coordinates of the created objects (e.g. items which appear on a video), an effect editing device 123 that creates images with dramatic effect, a sound editing device 124 that creates sound effects, and a scene editing device 125 that displays/outputs video scenes, with objects, motions, edit images, position of coordinates, images with dramatic effect, and sound effects integrated, are shown in the present embodiment.

The above polygon processing apparatus may be used as one of individual editing tools. Specifically, the polygon processing apparatus may function as a certain component of the scene editing device 125. Also, the above polygon processing apparatus may function as one component of the hereinafter described object creation device 111 and may be used in creating/editing objects.

Furthermore, as individual editing tools that edit model data, an object creation device 111 that creates and/or edits objects, a motion creation device 112 that creates and/or editing motions of objects, an image editing device 113 that edits the images of the created objects and motions, and a display/output device 121 that displays/outputs the created objects and motions are exemplified in the present embodiment. The video configuration data edited by these individual editing tools 111, 112, 113, 121, 122, 123, 124 and 125 is configured as video data after going through the data integration processing executed by the hereinafter described server 140. The data integration relates to a processing for allowing mutually heterogeneous video configuration data to interact with each other.

Specific configurations of respective individual editing tools 111-125 include computer(s) (either one computer, or a plurality of combined computers which are arranged per device shown in the block diagram of Fig. 11) and applications operating thereon.

When video configuration data is created or edited with respective individual editing tools 111-125, the video configuration data during the editing is constantly temporarily stored (overwrite-saved) on a storage such as a hard disc. Namely, as video configuration data is edited with each individual editing tools 111-125, with the video configuration data during the editing constantly temporarily stored (overwrite-saved) on a hard disc etc., there always exists latest version of video configuration data on a storage such as a hard disc.

Furthermore, one feature of the video production system according to the subject embodiment is that each individual editing tool 111-125 is provided with a constantly operating data transmission device 127. The data transmission device 127 is a device consisting of a monitoring/data transmission program, configured to constantly monitor temporal storage of video configuration data in a storage such as a hard disk which each individual editing tool 111-125 has and to transmit the temporarily stored video configuration data to the hereinafter described server 140.

The video production system according to the present embodiment has a server 140. A specific configuration of the server 140 is a computer, and the server 140 comprises the plurality of individual editing tools 111-125 as described above, a target display device 130 as playing equipment as described below, and equipment (e.g., LAN connection equipment) that networks to and from the said server 140.

Furthermore, one feature of the present embodiment is that the server 140 has a video configuration data management device 141. Specifically, the video configuration data management device 141 has a video configuration data storage device 142 that temporarily stores (overwrite saves) video configuration data transmitted from the each individual editing tool 111-125 on a storage such as a hard disc, a data integration device 143 (consisting of an integrated process application etc.) that reads out and integrates the video configuration data stored on the video configuration data storing device 142, and an integrated data storage device 144 that temporarily stores (overwrite saves) the integrated data on a hard disc etc.

In the video configuration management device 141 having such configuration, when video configuration data is transmitted from each individual editing tool 111-125, the video configuration data storing device 142 temporarily stores it. While the video configuration data includes a several kinds of data such as model data, effect data, scene editing information, position editing information and sound data, the video configuration data storing device 142 temporarily stores it distinctively according to the kinds. Moreover, all kinds of video configuration data are not transmitted simultaneously but are generally transmitted separately from kind to kind, and thus are temporarily stored from kind to kind as well. Though there are rare cases when video configuration data is transmitted exactly at the same time, even in such case, the video configuration data storing device 142 is configured to be able to temporarily store the plurality of video configuration data transmitted at the same time.

On the other hand, the data integration device 143, as a resident program, monitors temporal storage of video configuration data, and if there is temporal storage of even one kind of vide configuration data, it executes data integration of the video configuration data. Namely, the data integration device 143 reads out and integrates all the video configuration data stored on the video configuration data storing device 142, and temporarily stores the integrated data on the integrated data storage device 144.

In this way, video data is completed within the server 140. Meanwhile, the video production system according to the present embodiment further has a target display device 130, which can play the completed video data.

The target display device 130, as a specific configuration, has a plurality kind of playing equipment and display equipment. A specific example of each playback equipment is a computer as a game machine. The kind of playback equipment means the kind of game machine, and the kind of game machine (Playstation3 (e.g., registered trademark), XBOX360 (registered trademark), and Wii (registered trademark)) means the kind of machine architecture or platform provided for executing application programs realized by an operating system etc.

As for the target display device 130 according to the present embodiment, each playback equipment is provided with runtime etc., and thus, the integrated data (namely, video data) which is the data integrated in a predefined single format can be played on any different kind of playing equipment

Each playing equipment as the target display 130 executes playing processing when it receives a playing command. The playing command may be a command input via a controller etc. of a game machine, or may be a command transmitted to the playing equipment through a network (server 140) by each individual editing tool. When the playing equipment receives the playing command, it reads out video data temporarily stored on the integrated data storing device 144 via the server 140 and plays the read out video data. The played data can be displayed on the display equipment as described above. In case the display equipment is a monitor etc. connected to a game machine, for example, the video data is displayed on the monitor.

As another possible configuration of the target display 130, display equipment can be configured as a separate computer from each playing equipment. For example, the display equipment in this case can be configured as a personal computer installed at desks of each developer who is carrying out editing of video etc. The personal computer is connected with the playing equipment through a network (server 140). Preferably, the personal computer is provided with a viewer device (e.g., remote-controlled client application). When each developer enters a playing command via a keyboard etc. of the personal computer, the viewer device receives the command and the playing command is transmitted to each playing equipment, and each playing equipment which receives the transmitted command executes the above playing.

On the other hand, the playing equipment can be provided with a image service device (e.g., remote-controlled server application) that provides display information for the viewer device, and the image service device transmits display information (specifically, image data rendered in a video buffer memory for every unit time) at the playing equipment to the personal computer which is the source of the command. The viewer device displays the transmitted display information on a display of the personal computer. In this way, the display video played on the playback equipment can be checked on the display of the personal computer.

As there exists a plurality kind of playing equipment, video display on the display of the personal computer may adopt the configuration of individual window display for each playing equipment. As an alternative, video may be displayed on a single window by switching tabs. As a further alternative, a playing command designating the kind of playing equipment may be input. In case the kind of playback equipment is designated, playing is performed only on the designated kind of playing equipment.

As a further alternative configuration of the above display equipment in the nature of a personal computer, the computer as the individual editing tool may be configured to double as the personal computer. This is advantageous as playing results can be checked within a screen on the same display in parallel with editing of images etc.

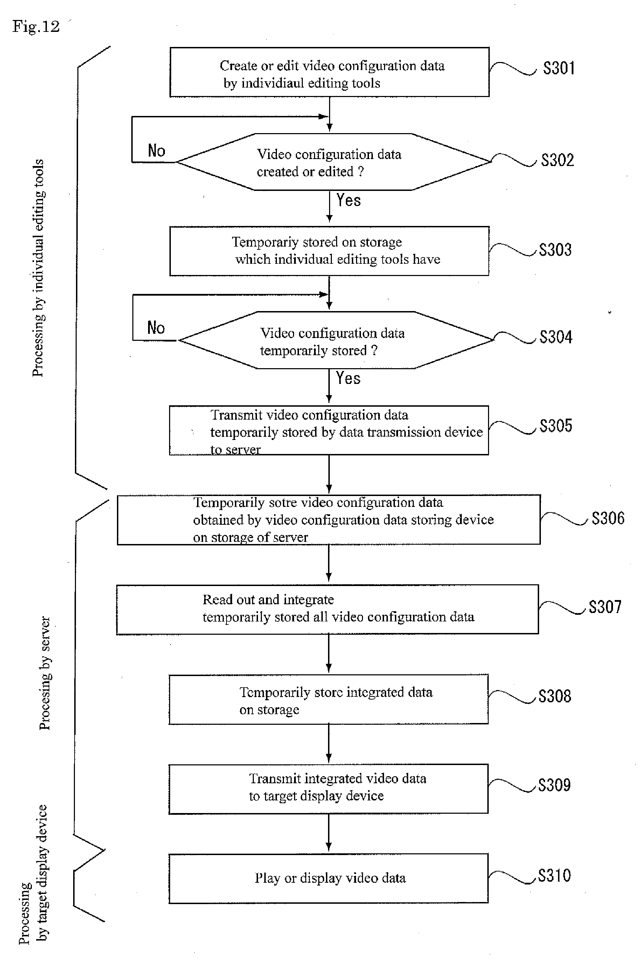

Next, the operating procedure of the video production system according to the present embodiment will be described with reference to Fig. 12. Fig. 12 is a flow chart exemplifying the operating procedure of the video production system according to the present embodiment.

If video configuration data is created or edited at each editing tool 111-125 (step301), the monitoring software installed on the computer which constitutes each individual editing tool 111-125 checks the presence or absence of editing work (step 302). In case it is determined that there have been editing work, the created or edited video configuration data is temporarily stored (overwrite saved) on a storage such as a hard disc which each individual tool 111-125 has. The temporal storage (overwrite save) is being executed on the editing of video configuration data, and thus, the latest version of video configuration data constantly exists on the storage such as a hard disc which each individual tool 111-125 has.

Furthermore, the computer which constitutes each individual editing tool 111-125 constantly monitors the status of temporal storage (overwrite save) onto its storage with the installed monitoring software, and if it confirms that video configuration data has been temporarily stored (overwrite saved) (step 304), it allows the data transmission device 127 which the computer which constitutes each individual editing tool 111-125 has to operate to transmit the temporarily stored video configuration data to the sever 140 (step 305).

The server 140 in the nature of a computer which has obtained the video configuration data transmitted by each individual editing tool 111-125 allows the video configuration data storing device 142 to operate with the installed software to temporarily store (overwrite save) the video configuration data transmitted with each individual editing tool 111-125 on the storage of the server 140 (step 306).

Furthermore, the server 140 reads out and integrates the video configuration data stored on the video configuration data storing device 142 using the data integration device 143 consisting of an integrated processing application etc. (step 307). Subsequently, the server 140 allows the integrated data storage 144 to operate with the installed software to temporarily store (overwrite save) the integrated video data on the storage (step 308).

These are the ways that video data is completed within the server 140, and the integrated video data is transmitted to the target display 130 through network connection equipment such as LAN connection equipment (step 309). The target display 130 which receives the data can constantly play the latest version of video data (step 310).

As step 301 through step 305 processed by each individual editing tool 111-125 can be taken in parallel time, the video production system according to the present embodiment is configured to be able to preferably be used at the site of software development.

Hereinabove, the entire configuration and operating procedure of the video production system according to the present embodiment have been described. Specifically in the video production system according to the present embodiment, the integrated data (video data) in development work performed by a number of people is updated almost in real time by the video configuration data management device 141, depending on individual progress at the individual editing tools 111-125. While, in the conventional normal distributed development environment, module development work at each PC cannot be integrated in real time depending on progress, the said video configuration data management device 141 has made it possible to easily adjust the balance between development works.

Furthermore, the video production system according to the present embodiment adopts the configuration where integrated data (video data) is stored in a predefined format, and several kinds of playing equipment share the data in the predefined format with the use of runtime. Typically, development of software adapted to one platform is made first, which is converted/transported to another platform after its completion. However, whether a program operates properly has been an issue in the transportation work, which has made the adjustment of detailed materials (e.g., design) impossible. Specifically in case of video products, the difference in platform is associated with the differences in color, camera angle, resolution, etc., which involves necessity of addressing the issue concerning detailed materials as well as significant regression in development process. On the other hand, the video production system according to the present embodiment is such that it proceeds with the common work in all platforms from the beginning of a development process, which enables development of video products without regression in development process.

Furthermore, the video production system according to the present embodiment can easily comprise a plurality kind of playing equipment at the same time. This is because of the configuration where integrated data (video data) is stored in a predefined format and the plurality kind of playing equipment share the data in the predefined format with the use of runtime. According to such configuration, it is not necessary to prepare a plurality of formats of integrated data per platform, which has an advantage of making a simpler configuration compared to conventional technologies.

Hereinabove, the preferred embodiment of the present invention has been described. However, the technical scope of the present invention is not limited to the scope that has been described in the above embodiment. Various variations or modifications can be made to the above embodiment.

As an example, the above target display 130 according to present embodiment can be configured to have a data distribution server connected with each playing equipment via a network (server 140). In this configuration, the integrated data storing device 144 transmits playing commands to each playback equipment when integrated data storing device 144 temporarily stores the integrated data (video data). Namely, every time integrated data (video data) is updated, each playing equipment promptly starts playing the data. Along with playing, the above image service device (e.g., remote-controlled server application) transmits the playing image to the data distribution server, and the data distribution server which has obtained the playing image stores the display information (video data) transmitted from the playing equipment depending on the kinds of playing equipment. Also, the data distribution server can be provided with a distribution device for video streaming distribution (via a distribution control program), which distributes the above display information in accordance with the commands from each personal computer. Such configuration as described above can limit the number of playing processing at the playing equipment to one per update of integrated data, resulting in reduction of machine loads. Moreover, preferably, display information can be distributed smoothly by means of streaming distribution by the data distribution server even if commands with time lag are issued from a number of personal computers.

In addition, while the video production system according to the present embodiment adopts the configuration where video data is integrated and updated almost in real time depending on respective progress on the individual editing tools 111-125, the video data which have been stored just before update may be kept stored so that the video data may be restored and used at the desired time. Alternatively, previous data may constantly be discarded and only the latest video data may constantly be stored.

### Industrial Applicability

The present invention can be for the computer-related industries for drawing 3DCG computer graphics, or in the gaming industry and the software industry using 3DCG.

### Explanation of Numerals

- 11: Polygon processing apparatus
- 13: Polygon information storage
- 15: Scanning line generator
- 17: Shielding determiner
- 19: Drawing processor
- 21: Polygon transparency determiner
- 23: Random value generator
- 30: First polygon
- 31,33,35: Vertices of the first polygon
- 37, 39, 41: Vertices of the polygons adjacent to the first polygon
- 43: First scanning line
- 45: Second scanning line
- 47: Third scanning line
- 49: Fourth scanning line
- 51: Second object
- 53, 55, 57: Vertices of the second polygon
- 59: Second polygon
- 61: Second object
- 63, 65, 67: Vertices of the third polygon
- 69: Third polygon
- 71: Third object
- 73, 75, 77: Vertices of the fourth polygon
- 79: Forth polygon
- 91: Inputter
- 92: CPU
- 93: Arithmetic operator
- 94: Storage
- 95: Imaging processing block
- 96: Bus
- 97: Interface
- 98: Information storing medium
- 99: Graphics processing unit
- 100: Video RAM
- 101: Display screen (monitor)
- 102: Speaker
- 111: Object creation device
- 112: Motion creation device
- 113: Image editing device
- 121: Display output device
- 122: Position editing device
- 123: Effect editing device
- 124: Sound editing device
- 125: Scene editing device
- 127: Data transmitting device
- 130: Target display
- 140: Server
- 141: Video configuration data management device
- 142: Video configuration data storing device
- 143: Data integration device
- 144: Integrated data storing device

## Claims

1. A polygon processing apparatus (11) for 3D computer graphics, the processing apparatus comprising:
a polygon information storing device (13) that stores information on polygons;
a scanning line generator (15) that generates a plurality of scanning lines from a certain polygon stored on the polygon information storing device (13); and
a shielding determinator (17) that determines whether or not the scanning lines are shielded by another polygon;
**characterized in that**
the scanning line generator (15) generates a plurality of scanning lines from the certain polygon in a plurality of directions, and
the processing apparatus further comprises a drawing processor (19) that controls not to execute predefined drawing processing on the certain polygon in case all the scanning lines generated from the certain polygon are shielded by another polygon.

2. The polygon processing apparatus as claimed in claim 1,
wherein the scanning line generator (15) comprises a device that generates a plurality of scanning lines from random positions within the certain polygon in random directions.

3. The polygon processing apparatus as claimed in claim 1, further comprising a polygon transparency determinator,
wherein the polygon transparency determinator (21) determines whether or not the polygon with which the scanning lines intersect is transparent or translucent,
and wherein the shielding determinator (17) determines that the scanning lines are not shielded by the polygon in case the polygon with which the scanning lines intersect is transparent or translucent.

4. A 3D computer graphics program **characterized in that** it allows a computer to execute the steps of:
generating a plurality of scanning lines from polygons in a plurality of directions;
determining whether or not the scanning lines are shielded by another polygon; and
controlling not to execute predefined drawing processing for the certain polygon in case all the scanning lines generated from the certain polygon are shielded by another polygon.

5. The program as claimed in claim 4, further comprising a step for determining whether or not the polygon with which the scanning lines intersect is transparent or translucent,
wherein the program determines that the scanning lines are not shielded by the polygon in case the polygon with which the scanning lines intersect is transparent or translucent.

6. A computer readable information storing medium that stores the program as claimed in claim 4 or claim 5.
